# EUROPEAN PATENT SPECIFICATION

(11) **EP 2 664 683 B1**
(45) Date of publication and mention of the grant of the patent: **04.07.2018**
(21) Application number: 12168207.4
(22) Date of filing: 16.05.2012
(51) Int. Cl.: C22C 33/00, C22C 45/02, C21D 6/00, B01J 37/08, B01J 27/22, B01J 35/00, B01J 35/10, B01J 37/34

(54) **Process for producing a mesoporous carbide**
Verfahren zur Herstellung eines mesoporösen Carbids
Procédé de production de carbure mésoporeux

(43) Date of publication of application: 20.11.2013
(73) Proprietor: Max-Planck-Institut für Eisenforschung GmbH, 40237 Düsseldorf (DE); Universitat Politècnica De Catalunya, 08034 Barcelona (ES)
(72) Inventor: Bruna, Pere, 08023 Barcelona (ES); Duarte-Correa, Maria Jazmin, 40211 Düsseldorf (DE); Lengsfeld, Julia, 40237 Düsseldorf (DE); Renner, Frank Uwe, 40479 Düsseldorf (DE)
(74) Representative: Bungartz Christophersen Partnerschaft mbB Patentanwälte

(56) References cited:
- WO-A1-2007/029906
- WO-A2-2005/116286
- US-A1- 2007 267 111
- US-B1- 6 258 185
- YANG Y ET AL: "Effects of crystallization on the corrosion resistance of Fe-based amorphous coatings", CORROSION SCIENCE, OXFORD, GB, vol. 59, 6 February 2012 (2012-02-06), pages 10-19, XP028417922, ISSN: 0010-938X, DOI: 10.1016/J.CORSCI.2012.02.003 [retrieved on 2012-02-23]
- INOUE A ET AL: "Preparation of Fe@?Cr@?Mo@?C amorphous powders and microstructure and mechanical properties of their hot-pressed products", MATERIALS SCIENCE ENGINEERING, ELSEVIER SEQUOIA, LAUSANNE, CH, vol. 95, November 1987 (1987-11), pages 101-114, XP025862517, ISSN: 0025-5416, DOI: 10.1016/0025-5416(87)90502-7 [retrieved on 1987-11-01]
- MOVAHEDI B ET AL: "Study on nanocrystallization and amorphization in Fe-Cr-Mo-B-P-Si-C system during mechanical alloying", MATERIALS SCIENCE AND ENGINEERING B, ELSEVIER SEQUOIA, LAUSANNE, CH, vol. 172, no. 1, 15 August 2010 (2010-08-15), pages 50-54, XP027107427, ISSN: 0921-5107 [retrieved on 2010-06-25]
- ARNBERG L ET AL: "New heat resistant tool materials produced from devitrified amorphous Fe@?Cr@?Mo@?C@?B and Fe@?Cr@?Mo@?C@?V powders", MATERIALS SCIENCE AND ENGINEERING A: STRUCTURAL MATERIALS:PROPERTIES, MICROSTRUCTURE & PROCESSING, LAUSANNE, CH, vol. 133, 15 March 1991 (1991-03-15), pages 288-291, XP024167121, ISSN: 0921-5093, DOI: 10.1016/0921-5093(91)90071-T [retrieved on 1991-03-15]
- BASER ET AL: "Fe-based bulk metallic glasses with Y addition", JOURNAL OF ALLOYS AND COMPOUNDS, ELSEVIER SEQUOIA, LAUSANNE, CH, vol. 434-435, 29 March 2007 (2007-03-29), pages 176-179, XP022008629, ISSN: 0925-8388, DOI: 10.1016/J.JALLCOM.2006.08.190

## Description

Present invention relates to a process for producing a mesoporous carbide wherein an amorphous alloy is subjected to a heat treatment and a chemical and/or electrochemical process, to a mesoporous carbide which is obtainable according to such process, to the use of the mesoporous carbide as catalyst or support material for a catalyst and to a crystallized steel obtainable from the amorphous steel alloy.

Mesoporous materials present a large surface-to-volume ratio providing sites for catalysis, molecular separation, adsorption or chemical sensing. Some of the classical mesoporous materials employed include silica, alumina, zirconia, zeolites, and other diverse oxides such Ti or Co, and they are synthetized by routes as self-assembly, sol-gel, spray drying and some variations of these methods known in the state of the art. Additionally, some elements of the platinum group such as Pd, Ru, and their alloys are broadly used and investigated, also as thin films on mesoporous supports to achieve lower costs or superior stability. Transition metals such Fe represent a cheaper option with high catalytic properties. One of the reasons that iron or its alloys are not considered for this purpose is its low environmental and thermal stability.

A. Kraupner et al. propose in J. Mater. Chem. 2010, 20, 6019 to use Fe₃C sponges an alternative for magnetic supports and heterogeneous catalysis. Furthermore, molybdenum carbides are also evaluated as potential stable catalysts for H₂ separation at high temperature membrane applications by S. K. Gade et al. (Adv. Mater. 2011, 23, 3585). These materials are stable at medium-high temperatures, which is suited for reactions as H₂ separation or water gas shift reaction (up to 400°C), and their cost is low compared with Pd or Ru alloys. Nanoporous states in metallic glasses have been produced by selective dissolution of inhomogeneous amorphous phases, for example, in Ti-based alloys (J. Jayaraj, Scr. Mater. 2006, 55, 1063-1066 and J. Jayaraj, Intermetallics, 2009, 17, 1120-1123) or Zr-based alloys (A. Gebert, A.A. Kündig, L. Schultz, H. Hono, Scr. Mater. 2004, 51, 961) as a result of a miscibility gap between the two main elements A. A. Kündig, Acta Mater. 2004, 52, 2441. However, the amorphous phase exhibits the known low stability at higher temperatures.

There is still a need for further mesoporous materials having a good stability at high temperatures and a good corrosion resistance on the one side and showing mesoporous properties on the other side so that they are useful as catalyst material or as support material for a catalyst.

It is therefore an object of the present invention to provide a process for the preparation of a nanocrystalline alloy which further forms microstructure of mesopores. It is another object of present invention to provide an alloy which shows a fine mesoporous structure with improved stability against corrosion and at high temperatures.

Subject of present invention is therefore a process, as defined in the claims, for producing a mesoporous carbide having a pore size between 10 nm to 70 nm, wherein an amorphous alloy consisting of in atomic percent

FeₐCr_{b}Mo_{c}C_{d}Bₑ

wherein
a is a number between 35 and 65,
b is a number between 10 and 20,
c is a number between 10 and 20,
d is a number between 12 and 20,
e is a number between 0 and 10,
and O, Si, Ti and/or Cu as unavoidable impurities is subjected to a heat treatment in order to obtain a crystalline fraction above 50 % of the alloy, and the product from the heat treatment is subjected to a chemical and/or electrochemical treatment.

A further subject of present invention is a mesoporous carbide obtainable according to the process mentioned above.

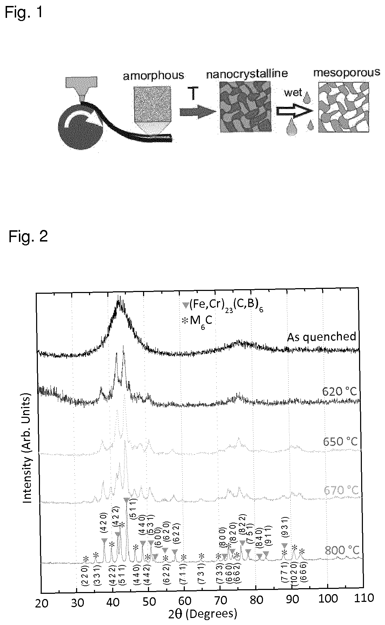

In the process of present invention the amorphous alloy is used as a precursor. During the heat treatment the crystallization of the amorphous alloy results in the formation of a fine structure comprising crystals in a nanometer range. This structure obtained from the heat treatment is used as an intermediate product to generate a mesoporous structure of so called M₂₃C₆ carbides (M = Fe, Cr, Mo). The complete process is shown in figure 1 which demonstrates a schematic diagram of the process of present invention to produce mesoporous structures from amorphous steel alloys.

In the process of present invention an amorphous alloy having a composition consisting of FeₐCr_{b}Mo_{c}C_{d}Bₑ, wherein a, b, c, d and e are as defined above is used as a starting material. Good results of crystallization and subsequent formation of the mesoporous structure are obtained with an alloy wherein the ratio of (a + b + c) : (d + e) is from 3 : 1 to 6.5 : 1, and the ratio of b : c is from 1.2 : 1 to 1 : 1.2.

The alloy used as starting material may comprise unavoidable impurities such as O, Si, Ti and/or Cu.

In a first step the amorphous alloy is subjected to a heat treatment in order to obtain a crystalline fraction above 50 % in the alloy. The heat treatment includes initial devitrification, i. e. formation of crystals with a maximum size of approximately 50 nm by annealing the starting material at high temperatures. The range of temperatures for crystallization of the amorphous alloy can be assessed by Differential Scanning Calorimetry (DSC). The heat treatment is preferably carried out at a temperature range above the second crystallization temperature, if the amorphous alloy shows more than two crystallization temperatures, and the melting temperature. The heat treatment is carried out between 600 °C and 1000°C, preferably between 650°C and 1000°C.

It was found out that during the heat treatment two main phases are formed which may be identified as a Cr-rich phase and a Mo-rich phase. During the heat treatment changes on the ordering of the atoms from amorphous to nano-crystalline arrangements occur. Intermediate states which are analyzed by high resolution techniques present different degrees of crystallization and show composites structures of crystal precipitates up to 50 nm diameter embedded in a metallic glass matrix. The microstructure of the crystallized fractions of the alloy is composed of two main phases that were identified as a Cr-rich phase which is a first phase having the composition of (Feₐ₁Cr_{b1}Mo_{c1})₂₃(C,B)₆, wherein a1 is a number from 27.4 to 80, b1 is a number from 20 to 60, and c1 is a number from 0 to 12.6 and a1+b1+c1 = 100, and a second phase as a Mo-rich phase of (Feₐ₂Cr_{b2}Mo_{c2})₆(C,B), wherein a2 is a number from 25.3 to 63, b2 is a number from 0 to 8.2, and c2 is a number from 37 to 66.5 and a2+b2+c2 = 100.

The effect of the heat treatment on an amorphous alloy is shown by amorphous ribbons with a nominal composition of Fe₅₀Cr₁₅Mo₁₄C₁₅B₆, (V. Ponambalam, J. Mater. Res. 2004, 19, 1320) obtained by a melt spinning process.

The amorphous alloy used as a starting material may be obtained by a rapid quenching process, preferably from a melt spinning process or casting process, for example into copper mold, or by coating processes, as thermal spraying or physical vapor deposition of the alloy onto a support material or substrate.

In the subsequent process step the product from the heat treatment is subjected to a chemical and/or electrochemical treatment. In this step the chemical and/or electrochemical weak phases of the crystallized alloy are dissolved leading to the mesoporous structure. The chemical treatment can be carried out by immersing the heat treated material into an acidic or basic solution, for example with a strong acid such as HCI, HNO₃, H₂SO, or any mixture of them such as aqua regia. The electrochemical treatment of the crystallized alloy can be performed with either galvanostatic polarization or potentiostatic polarization. For the galvanostatic polarization the current is kept constant; typical values are 70-80 µA, dependent on the sample size. The potentiostatic polarization is carried out with a constant potential which is selected at the breakdown potential of the material. Typical values for the FeₐCr_{b}Mo_{c}C_{d}Bₑ starting alloy are 430-480mV vs. a standard hydrogen electrode.

A further subject of present invention is a mesoporous carbide which is obtainable by the process described above.

The product from the chemical and/or electrochemical treatment is a mesoporous material having a pore size between 10 nm and 70 nm, preferably between 20 nm to 60 nm.

Depending on the starting product and on the conditions of the electrochemical or chemical treatment the mesoporous structure may be present on the surface of the alloy or the alloy may be percolated by the pores, i. e. has the structure of a sponge.

Preferably the mesoporous carbide has the form of a film, sheet, plate, bar or in the form of particles, the surface of each of these films shows the mesopores. The mesoporous carbide according to present invention may be used as a catalyst or as a support material for a catalyst.

In the process of present invention a crystallized metallic glass is obtained as an immediate product.

A further subject of present invention is therefore a crystallized metallic glass having the composition consisting of in atomic percent

FeₐCr_{b}Mo_{c}C_{d}Bₑ

wherein
a is a number between 35 and 65
b is a number between 10 and 20 c is a number between 10 and 20 d is a number between 12 and 20 e is a number between 0 and 10, O, Si, Ti and/or Cu as unavoidable impurities characterized in that the crystallized structure comprises phases with different amounts of Cr and Mo one phase of (Feₐ₁Cr_{b1}Mo_{c1})₂₃(C,B)₆, wherein a1 is a number from 27.4 to 80, b1 is a number from 20 to 60, and c1 is a number from 0 to 12.6 and a1+b1+c1 = 100, and a second phase of (Feₐ₂Cr_{b2}Mo_{c2})₆(C,B), wherein a2 is a number from 25.3 to 63, b2 is a number from 0 to 8.2, and c2 is a number from 37 to 66.5 and a2+b2+c2 = 100.

The crystallized metallic glass shows a crystalline fraction of above 50 % of the total form of the alloy. The crystallized fractions comprise preferably main phases (Fe, Cr, Mo)₂₃(C,B)₆ and (Fe,Mo)₆C, with M₇C₃ and alpha-Fe in minor concentration.

### Examples

Amorphous ribbons of Fe₅₀Cr₁₅Mo₁₄C₁₅B₆ (at.%) were prepared by melt spinning with a speed of 40 m/s (H. H. Liebermann, IEEE Transactions on Magnetics, 1976, 12, 921; A. L. Greer, Science, 1995, 267, 1947). The glass transition temperature (T_{g} = 550 °C), the onset of the first and second crystallization temperatures (Tₓ₁ = 602 °C, Tₓ₂ = 641 °C), and the melting temperature (Tₘ = 1112 °C) of the amorphous alloy were obtained by differential scanning calorimetry. These parameters served as an indicator of the transformations undergone by the alloy during heating. Crystallization of the amorphous alloy was then induced by thermal annealing in argon atmosphere at 620 °C, 650 °C, 670 °C and 800 °C for 20 min to obtain partially and fully crystalline conditions. The amorphous state and the lack of long range order in the as-quenched alloy are evidenced by the respective X-ray diffractogram displayed in Figure 2. XRD measurements using a monochromatic Cu Kα radiation (Bruker AXS) were set up in 2θ angle in the range of 10-110° with a step size of 0.05°.

The pattern of the as-quenched ribbons shows the broad diffuse peaks characteristic of the amorphous alloys. The signals at 620 °C point to a composite structure of crystalline carbides in an amorphous matrix. As the annealing temperature increases to 650 °C and 670 °C signatures of a crystalline structure are dominant, however, an amorphous contribution remains still appreciable as background signal in the difractogram. In addition to the main phases at 800 °C, a M₇C₃ phase is also present in these intermediate states. At 800 °C the sample is considered fully crystallized. The relatively sharp Bragg peaks at this last state indicate the presence of two main nano-crystalline phases, identified by correlated analysis with Atom Probe Tomography (APT) as (Fe,Cr)₂₃(C,B)₆ and η-Fe₃Mo₃C.

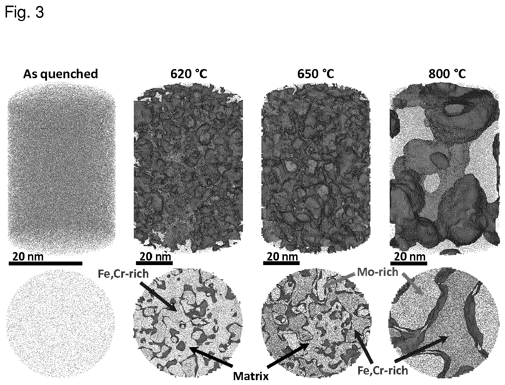

APT analyses were performed using a local electrode atom probe (Imago LEAP™ 3000X HR) in voltage mode at 200 kHz pulse frequency, with a pulse fraction of 15% for a detection rate of 0.5%. The specimen base temperature was 60 K. APT specimens were prepared using a FEI Helios Nanolab 600 dual-beam focused ion beam as described in K. Thompson, D. Lawrence, D. J. Larson, J. D. Olson, T. F. Kelly, B. Gorman, Ultramicroscopy, 2007, 107, 131; M. K. Miller, K. F. Russell, G. B. Thompson, Ultramicroscopy, 2005, 102, 287. During the final step of the tip preparation, low ion energies of 5 kV were used to reduce Ga ions implantation. The Ga content in the specimens was ∼0.02 at.%. APT elemental mapping of the metals is displayed in Fig. 3 in green, blue, and red colors for Fe, Cr and Mo, respectively. B and C were omitted for clarity in the figures. The lower images correspond to cross-sections (slices of 2-5nm thickness) from the cylindrical reconstructions. Isoconcentration surfaces of Cr and Mo were plotted to highlight phase boundaries. A uniform distribution of the elements in the as-quenched alloy confirms the chemical homogeneity in the amorphous state. At 620°C segregation mainly of the metallic elements clearly occurs. An atomic redistribution to form close to spherical Cr-rich precipitates of size smaller than 20 nm is observed in the image. Isoconcentration surfaces at 14 at. % Cr outline these regions in blue color in Fig 3. The average atomic compositions of the different regions are listed in Table 1. The composition of the Cr-rich regions points to a M₂₃(C,B)₆ phase (with M=Fe,Cr,Mo). During the formation of these precipitates Mo atoms are rejected to the amorphous matrix as the Cr concentration increases. This behavior can be attributed to the low bonding between these two elements according to their heat of mixing of 0 kJ/mol (A. Takeuchi, A. Inoue, Mat. Trans. JIM, 2000, 41, 1372). Mo is increasingly enriched in the amorphous matrix (red areas in the reconstruction at 620 °C) until finally a secondary crystalline Mo-rich M₆C phase is nucleated, highlighted by the isoconcentration surfaces at 22 at. % Mo in Figure 3 at 650 °C. Figure 3 shows the elemental mapping of Fe atoms for the sample annealed at 800 °C together with isoconcentration surfaces for 15 at. % of Cr and 32 at. % of Mo. Mo-rich and Cr-rich phases of size up to 50 nm, are clearly visible and their boundaries are indicated by the isoconcentration surfaces. The composition of the Cr-rich region is in agreement with the (Fe,Cr)₂₃(C,B)₆ phase identified by XRD, with a small amount of Mo atoms partially substituting some of the original metals. On the other hand, the composition of the M₆C phase corresponds to the data obtained from the Mo-rich region, with a small concentration of boron taking the place of carbon atoms. Annealing and crystallization at 800 °C then leads to concentrations of the two above main phases very close to the equilibrium predicted by thermodynamic calculations. Most important, a percolation of both crystalline phases throughout the fully crystallized sample is clearly visible.

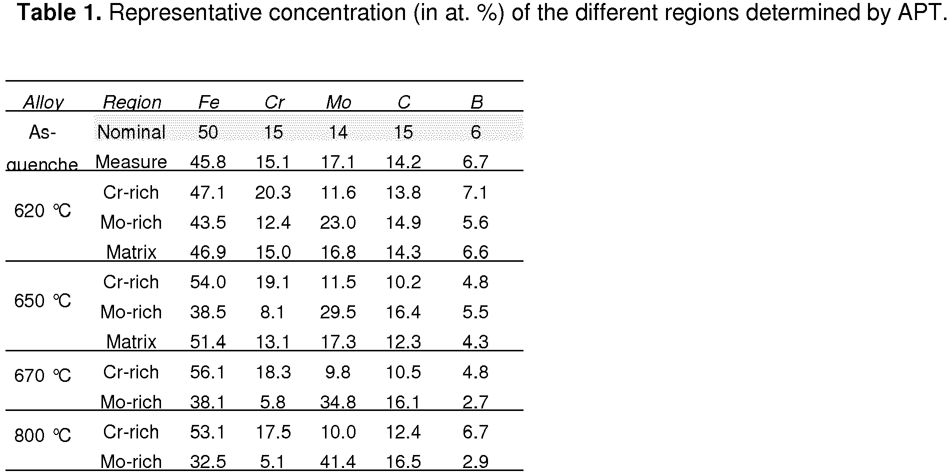

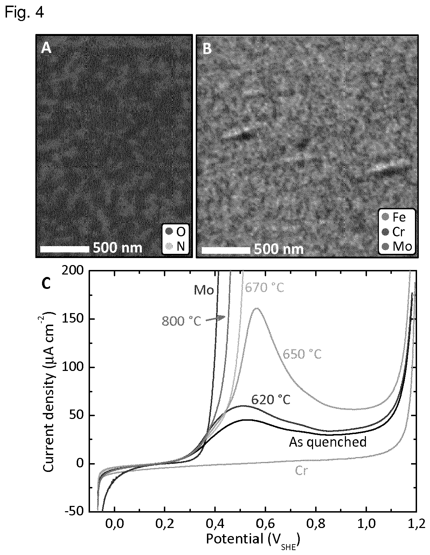

After annealing, nitride and oxide formation potentially related to either residual gas contaminations as well as possible bulk material impurities were revealed by Scanning Auger Electron Microscopy (SAEM). Auger electron maps were recorded with a scanning Auger microprobe (Jeol JAMP-9500F). Figure 4A shows SAEM overlaying maps of O and N after heat treatment at 800 °C. A more detailed analysis of the Fe and Cr signatures of the recorded scans revealed the presence of Fe₂O₃ and Cr₂O₃ as main oxide components of the surface layer, while nitrogen, in smaller concentration, tends to form compounds with molybdenum. Although the impurity reaction layers would be dissolved in the acidic electrolytes used, freshly-prepared clean starting surfaces by Ar sputtering would ensure reproducibility of the measurements. After removal of a nominally 300nm thick surface layer by Ar ion bombardment the surface was essentially free of N and O. Moreover, a correspondence between Fe and Cr distributions of the individual SAEM maps was exposed while Mo forms separated small Mo-rich islands. Figure 4B displays the overlay of the Fe, Cr, and of Mo maps. The elemental distribution of the fresh surface closely corresponds to the distribution displayed in the APT slice in Figure 3. Sputtering is thus able to produce an almost ideal cut of the bulk material, (although some ripples emerge in the surface morphology). Any layers formed during the annealing treatment were therefore always removed by sputtering with Ar ions before any electrochemical measurement and corrosion performance tests with an Ion Miller, Gatan Co., Ltd., Model 682 PECS for 5 min, operating at an angle of 70° and a beam energy of 5 kV.

The corrosion behavior of the alloy at the different stages of crystallization was analyzed by electrochemical linear polarization sweeps in the anodic (positive) direction, in 0.1 M HCI solution, Figure 4C. Electrochemical measurements were performed using a scanning droplet cell with gold as counter electrode and a micro Ag|AgCl as reference electrode (S. O. Klemm, Electrochim. Acta, 2011, 56, 4315). The sample was connected as working electode with an area of 374 µm⁻². Open circuit potential measurements were recorded for 100sec in 0.1 M HCI followed by linear polarization curves (in positive direction) starting -0.3 V with a scan rate of 2 mVs-1 at ambient pressure and temperature. All potentials were then referred to SHE. The fully amorphous alloy passivates spontaneously and shows the largest passivation range. Passivation occurs at low current density (less than 50 µA cm⁻²) only slightly higher than the presented by pure Cr, when compared in the plot. The breakdown potential reaches 1.1 V vs. SHE, linked to the massive dissolution of the elements present in the alloy, thus showing a highly protective film against acid solutions. An increasing annealing temperature to 620 °C leads to a moderately larger passive current and an initial dissolution peak with a clearly higher intensity than the as-quenched material. The polarization curve of the sample annealed at 650 °C presents rather a pseudopassive polarization curve with a breakdown potential near the fully amorphous state about 1.1 V. These deviations showing a detrimental effect on the corrosion behavior are due to chemical segregation and formation of the first nanocrystals. As the annealing temperature further increases and the alloy is crystallized (at 670°C and 800 °C), the polarization curve shows an active behavior. The breakdown potential is close to 0.3 V, considerably lower than the completely amorphous state. The polarization curve resembles closely the active behavior of pure Mo as indicated in Fig. 4C.

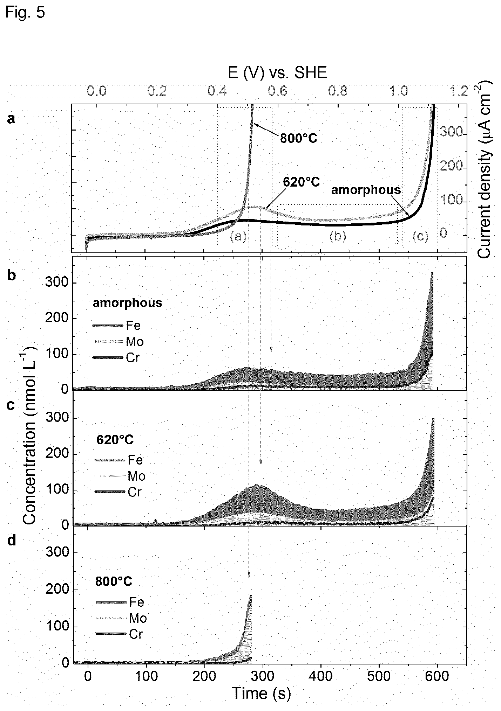

By element-resolved corrosion analysis in 0.1M H₂SO₄, we recently directly attributed the differences in the corrosion behavior to the phases formed during annealing process. The dissolution stoichiometry differs from the amorphous to the alloy crystallized at 800°C. Important is the final dissolution part where the breakdown of the material occurs. In the case for the passive samples (amorphous, 550°C and 620°C) the material dissolves with the bulk stoichiometry at breakdown potential. The main species dissolved are Fe with both Mo and Cr in minor concentrations in equivalent ratio. The active samples (670°C and 800°C) show at breakdown potential a dissolution stoichiometry with nearly 1:1 ratio of Fe and Mo with only little Cr dissolution (Figure 5). This drastic change in dissolution stoichiometry therefore coincides with the sudden transition from a passive to an active state, indicating that an electrochemically, chromium depleted and Mo-rich phase dominates the corrosion behavior. Interestingly, the stoichiometry for this electrochemical weak phase in the nanocrystalline 800°C sample agrees very well to the atomic ratio of the Mo-rich carbide found in APT (Table 2).

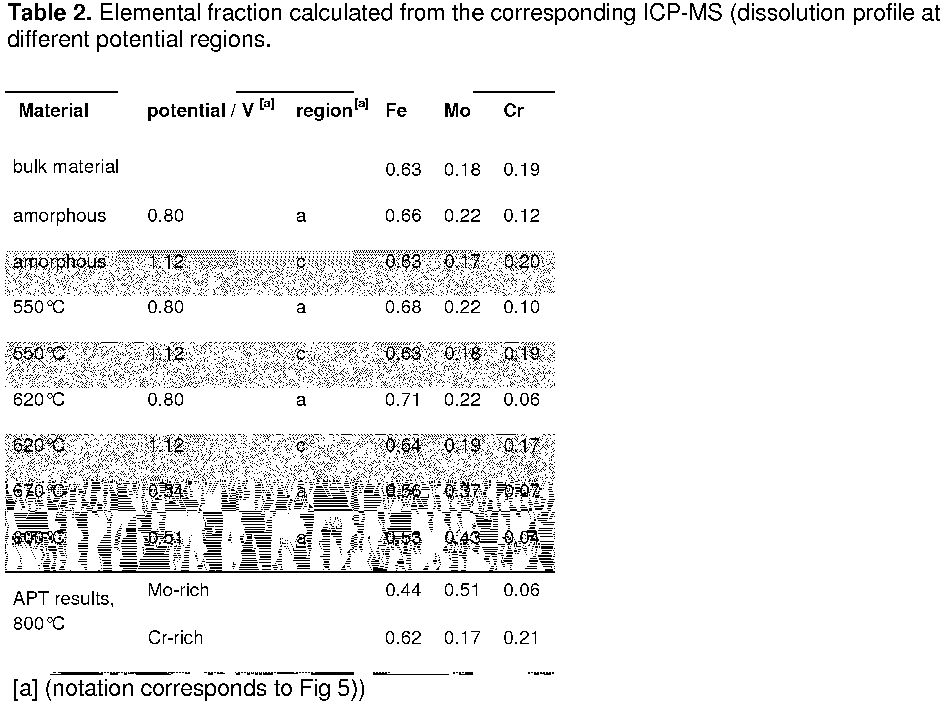

The observed good corrosion behavior of amorphous materials is often attributed to the lack of defects and boundaries, and the homogeneity of the amorphous phase providing a high amount of passivating elements. Formation of an homogeneous film of chromium oxihydroxide has been proposed as responsible of the passive state in amorphous steels (K. Hashimoto, Corrosion 2002, 58, 715 and S. J. Pang, Mater. Trans. JIM 2002, 43, 2137). A heterogeneous structure, as described above, may promote a corrosion process and accordingly will have an unfavorable effect on corrosion resistance. In more detail, phase separation and crystallization in the Fe₅₀Cr₁₅Mo₁₄C₁₅B₆ metallic glass causes formation of Mo-rich zones with low concentration of Cr, and this more unstable phase will dissolve preferentially. An interconnected network morphology, as observed in the APT reconstructions at annealing temperature of 800°C (Figure 3), would generate dissolution throughout the material causing an early breakdown. In the partially crystalline state (annealing at 620 and 650 °C), weak Mo-rich regions initiate the corrosion process. However, smaller crystal sizes, lack of percolation, and the remaining presence of the amorphous state block the dissolution.

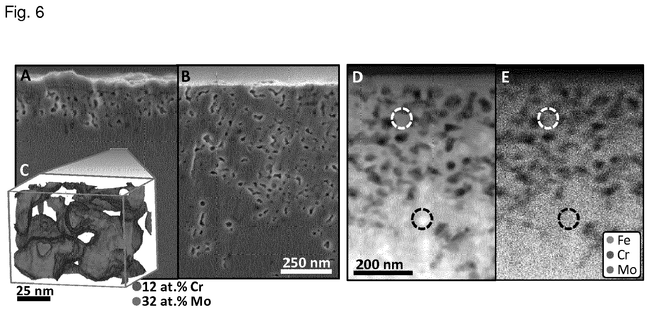

In the case of percolating microstructures continuous dissolution will be sustained as shown in Figure 5. Dissolution of Mo-rich phases after crystallization was promoted after galvanostatic polarization at different times in acid solution after the polarization curves were recorded. Different polarization times of 2000s and 4000s (SEM Figs. 6B and C) demonstrate the ability of producing mesoporous structures with different depth by controlling the treatment time. Samples cross section were observed in a Hitachi SU8030 cold FEG SEM. Cuts were made in a cross section polisher (Hitachi IM4000) using beam energy of 6 keV and swing angle ±30°. The dissolution can thus penetrate into the percolated bi-phase material (Fig.6A). These statements are confirmed by Scanning Transmission Electron Microscopy (STEM) and Energy Dispersive X-ray Spectroscopy (EDX). TEM specimens were prepared from regions of interest using a FEI Helios Nanolab 600 dual-beam focused ion beam system operated at 30 kV. To minimize the effects of Ga ions beam damage, the final milling of the specimens was conducted at low ion energies (5 kV). TEM was performed using a Jeol JEM-2200FS operated at 200kV and equipped with Jeol EDX system for chemical analysis. Images with a high atomic number contrast were acquired using a high angle annular dark field (HAADF) detector in STEM mode. Chemical segregation is observed as variations in contrast in the dark field STEM micrograph in Figure 5D. The heaviest element, Mo in this case, is present in the lighter regions, while the Cr-rich phase corresponds to the dark areas. Quantitative results from these two phases, obtained by point EDX analysis in several regions of the sample, show enrichment in Cr in the porous layer (i.e. regions enclosed in white). There, Cr reaches an average concentration of 22 at. %. Mo-rich areas as the one surrounded in black, contain around 39 at. % Mo while the Cr concentration decreases to 10 at. %. As can be seen more clearly in the Mo-Fe-Cr overlaying EDX maps (Figure 6E), only small concentration of Mo is present in the porous layer, thus confirming dissolution of a percolating Mo-rich phase.
**Fig. 2** shows the X-ray patterns of the alloy as-quenched (amorphous) and annealed for 20 min at 620 °C, 650 °C, 670 °C (partially crystalline) and 800 °C (fully crystalline).
**Fig. 3** shows the distribution of the metallic elements (Fe: green •, Cr: blue •, Mo: red •) in the as-quenched, partially and fully crystallized alloys. Isoconcentration surfaces of 22 at.% Mo and 16 at.% Cr highlight three different regions in the samples annealed at 620 °C and 650 °C. 32 at.% Mo and 15 at.% Cr are plotted for the crystallized alloy at 800 °C. Lower images are 2-5 nm thick cross-sections of the respective reconstructions.
**Fig. 4** shows the overlap of the individual SAEM maps after crystallization at 800 °C of
   (**A**) N and O in the original oxidized surface, and
   (**B**) Fe, Cr and Mo after Ar bombardment.
   (**C**) Polarization curves of pure Mo and Cr in addition to the alloy in the fully amorphous, partially crystalline and crystalline states.
**Fig.5** shows Potential sweep data and online ICP-MS dissolution profiles,
   a, Potentiodynamic polarization curves (positive direction) of amorphous, partial nanocrystalline (620°C) and fully nanocrystalline (800°C) Fe₅₀Cr₁₅Mo₁₄C₁₅B₆ in 0.1 M H₂SO₄
   **b,** dissolution profile of amorphous sample.
   **c,** dissolution profile of 620°C annealed sample.
   **d,** dissolution profile of 800°C annealed sample.
**Fig. 6** shows (**A**) APT reconstruction showing percolation of Mo-rich phases in the sample annealed at 800 °C (isoconcentration surfaces of 15 at.% Cr and 32 at.% Mo are presented in blue and red respectively). SEM images from the cross-section of the nano-crystalline alloy after galvanostatic polarization at 72µA for 2000s (**B**) and 4000s (**C**). (**D**) HAADF-STEM micrograph after polarization for 4000s and (**E**) corresponding EDS map showing the molybdenum, iron and chromium distributions in the porous layer and the bulk. Examples of Mo-rich and Cr-rich areas are bordered by black and white dashed circles, respectively.

### Chemical treatment:

Immersion of the sample into an acidic solution
Ex. 1: immersion of 800°C sample (non ion milled) in 0.1 M HNO3 for ca. 24h
Ex. 2: immersion of 800°C sample (non ion milled) in ∼5 M HNO3 for ca. 1h

### Electrochemical treatment:

The dissolution of the Mo-rich phases after crystallization were performed with either galvanostatic polarization or potentiostatic polarization. During galvanostatic polarization, a constant current is applied to the sample with usual values of 70-80 µ A, dependent on the sample size. In the potentiostatic polarization a constant potential is applied with an usual voltage of 430-480mV vs. SHE, the potential is selected at the breakdown potential of the material. In both cases the sample is immersed in the acid or basic solution (0.1M HCl or 0.1 M H₂SO₄ for example) and the potential or current are applied for a defined period of time at the conditions explained before(typical immersion time is 1000-4000sec). With increasing immersion time the depth of the mesoporous structure will increase.

The electrochemical measurements were carried out using a three electrode setup, where the sample is connected as working electrode, graphite and Ag/AgCl are used as counter electrode and reference electrode, respectively (any other counter and reference electrodes work as well).

### Non-patent literature

### State of art

Kraupner et al. propose in J. Mater. Chem. 2010, 20, 6019
S. K. Gade et al. (Adv. Mater. 2011, 23, 3585)
(J. Jayaraj, Scr. Mater. 2006, 55, 1063-1066
J. Jayaraj, Intermetallics, 2009, 17, 1120-1123
(A. Gebert, A.A. Kündig, L. Schultz, H. Hono, Scr. Mater. 2004, 51, 961
A. Kündig, Acta Mater. 2004, 52, 2441
V. Ponambalam, J. Mater. Res. 2004, 19, 1320

### Experimental and analytical methods

H. H. Liebermann, IEEE Transactions on Magnetics, 1976, 12, 921;
A. L. Greer, Science, 1995, 267, 1947
K. Thompson, D. Lawrence, D. J. Larson, J. D. Olson, T. F. Kelly, B. Gorman, Ultramicroscopy, 2007, 107, 131
M. K. Miller, K. F. Russell, G. B. Thompson, Ultramicroscopy, 2005, 102, 287
A. Takeuchi, A. Inoue, Mat. Trans. JIM, 2000, 41, 1372
S. O. Klemm, Electrochim. Acta, 2011, 56, 4315
K. Hashimoto, Corrosion 2002, 58, 715
S. J. Pang, Mater. Trans. JIM 2002, 43, 2137). A

## Claims

1. Process for producing a mesoporous carbide having a pore size between 10 nm and 70 nm, wherein an amorphous steel alloy consisting of in atomic percent
FeₐCr_{b}Mo_{c}C_{d}Bₑ
wherein
a is a number between 35 and 65,
b is a number between 10 and 20,
c is a number between 10 and 20,
d is a number between 12 and 20,
e is a number between 0 and 10 and
O, Si, Ti and/or Cu as unavoidable impurities, is subjected to a heat treatment at a temperature between 600°C and 1.000°C obtaining a product having a crystalline fraction above 50 % of the alloy and comprising a first phase of (Feₐ₁Cr_{b1}Mo_{c1})₂₃C,B)₆, wherein a1 is a number from 27.4 to 80, b1 is a number from 20 to 60, and c1 is a number from 0 to 12.6 and a1+b1+c1 = 100, and a
second phase of (Feₐ₂Cr_{b2}Mo_{c2})₆(C,B), wherein a2 is a number from 25.3 to 63, b2 is a number from 0 to 8.2, and c2 is a number from 37 to 66.5 and a2+b2+c2 = 100, and
the product from the heat treatment is subjected to a chemical and/or electrochemical treatment.

2. Process according to claim 1 wherein the ratio of (a + b + c) : (d + e) is from 3 : 1 to 6.5 : 1, and the ratio of b : c is from 1.2 : 1 to 1 : 1.2.

3. Process according to any of claims 1 and 2 , **characterized in that** the heat treatment is carried out at a temperature range above the second crystallization temperature, if the amorphous alloy shows more than two crystallization temperatures, and the melting temperature.

4. Process according to any of claims 1 to 3, **characterized in that** the chemical and/or electrochemical treatment comprises contacting the product from the heat treatment with acidic or basic solution and the electrochemical treatment is performed with galvanostatic polarization or potentiostatic polarization.

5. Process according to any of claims 1 to 4, **characterised in that** the mesoporous carbide has a pore size between 20 nm and 60 nm.

6. Process according to any of claims 1 to 56, **characterised in that** the amorphous alloy is obtained by a rapid quenching process, preferably from a melt spinning process or cast into copper molds, or coatings production by thermal spraying and physical vapor deposition.

7. Mesoporous carbide obtainable according to the process of any of claims 1 to 6.

8. Mesoporous carbide according to claim 7 which has the form of a film, sheet, plate, bars and particles, the surface of which shows mesopores.

9. Use of the mesoporous carbide according to any of claims 7 or 8 as catalyst or support material for a catalyst.

10. Crystallized metallic glass alloy with a crystalline fraction above 50 % having the composition consisting of in atomic percent
FeₐCr_{b}Mo_{c}C_{d}Bₑ
wherein
a is a number between 35 and 65,
b is a number between 10 and 20,
c is a number between 10 and 20,
d is a number between 12 and 20,
e is a number between 0 and 10,
and O, Si, Ti and/or Cu as unavoidable impurities, **characterized in that** the crystallized structure comprises phases with different amounts of Cr and Mo one phase of (Feₐ₁Cr_{b1} Mo_{c1})₂₃C,B)₆, wherein a1 is a number from 27.4 to 80, b1 is a number from 20 to 60, and c1 is a number from 0 to 12.6 and a1+b1+c1 = 100, and a second phase of (Feₐ₂Cr_{b2}Mo_{c2})₆(C,B), wherein a2 is a number from 25.3 to 63, b2 is a number from 0 to 8.2, and c2 is a number from 37 to 66.5 and a2+b2+c2 = 100.

11. metallic glass alloy according to claim 10, **characterised in that** it comprises as main phases (Fe, Cr, Mo)₂₃(C,B)₆ and (Fe,Mo)₆C, with M₇C₃ and alpha-Fe in minor concentration.

## Patentansprüche

1. Verfahren zum Herstellen eines mesoporösen Carbids mit einer Porengröße zwischen 10 nm und 70 nm, in welchem eine amorphe Stahllegierung, bestehend in Atomprozent aus
FeₐCr_{b}Mo_{c}C_{d}Bₑ,
worin
a eine Zahl ist zwischen 35 und 65,
b eine Zahl ist zwischen 10 und 20,
c eine Zahl ist zwischen 10 und 20,
d eine Zahl ist zwischen 12 und 20,
e eine Zahl ist zwischen 0 und 10 und
O, Si, Ti und/ oder Cu als unvermeidbare Verunreinigungen,
einer Hitzebehandlung bei einer Temperatur zwischen 600°C und 1000°C unterzogen wird, wobei ein Produkt mit einem kristallinen Anteil oberhalb 50% in der Legierung erhalten wird und umfassend eine erste Phase (Feₐ₁Cr_{b1}Mo_{c1})₂₃(C,B)₆, worin a1 eine Zahl ist von 27,4 bis 80, b1 eine Zahl ist von 20 bis 60 und c1 eine Zahl ist von 0 bis 12,6 und a1 + b1 + c1 = 100, und eine zweite Phase (Feₐ₁Cr_{b2}Mo_{c2})₆(C,B), worin a2 eine Zahl ist von 25,3 bis 63, b2 eine Zahl ist von 0 bis 8,2 und c2 eine Zahl ist von 37 bis 66,5 und a2 + b2 + c2 = 100
und das Produkt aus der Hitzebehandlung wird einer chemischen und/oder elektrochemischen Behandlung unterzogen.

2. Verfahren nach Anspruch 1, worin das Verhältnis (a + b + c): (d + e) von 3:1 bis 6,5:1 und das Verhältnis von b:c von 1,2:1 bis 1:1,2 beträgt.

3. Verfahren nach einem der Ansprüche 1 und 2, **dadurch gekennzeichnet, dass** die Hitzebehandlung in einem Temperaturbereich oberhalb der zweiten Kristallisationstemperatur durchgeführt wird, wenn die amorphe Legierung mehr als zwei Kristallisationstemperaturen zeigt, und der Schmelztemperatur.

4. Verfahren nach einem der Ansprüche 1 bis 3, **dadurch gekennzeichnet, dass** die chemische und/oder elektrochemische Behandlung umfasst das Inkontaktbringen des Produktes aus der Hitzebehandlung mit einer sauren oder basischen Lösung und die elektrochemische Behandlung wird durchgeführt mit galvanostatischer Polarisation oder potentiostatischer Polarisation.

5. Verfahren nach einem der Ansprüche 1 bis 4, **dadurch gekennzeichnet, dass** das mesoporöse Carbid eine Porengröße zwischen 20 nm und 60 nm aufweist.

6. Verfahren nach einem der Ansprüche 1 bis 5, **dadurch gekennzeichnet, dass** die amorphe Legierung erhalten wird durch ein schnelles Abschrecken, bevorzugt aus einem Schmelzspinnverfahren oder durch Guss in Kupferformen, oder Beschichtungsverfahren durch thermisches Sprühen und physikalische Dampfabscheidung.

7. Mesoporöses Carbid erhältlich nach einem der Ansprüche 1 bis 6.

8. Mesoporöses Carbid nach Anspruch 7, welches in Form eines Films, eines Bogens, einer Platte, Barren und Teilchen vorliegt, wobei die Oberfläche Mesoporen aufweist.

9. Verwendung des mesoporösen Carbid nach einem der Ansprüche 7 oder 8 als Katalysator oder als Trägermaterial für Katalysatoren.

10. Kristallisierte Legierung aus metallischem Glas mit einem kristallinen Anteil oberhalb 50 % mit einer Zusammensetzung, bestehend in Atomprozent besteht aus
FeₐCr_{b}Mo_{c}C_{d}Bₑ
worin
a eine Zahl ist zwischen 35 und 65,
b eine Zahl ist zwischen 10 und 20,
c eine Zahl ist zwischen 10 und 20,
d eine Zahl ist zwischen 12 und 20,
e eine Zahl ist zwischen 0 und 10 und
O, Si, Ti und/ oder Cu als unvermeidbare Verunreinigungen,
**dadurch gekennzeichnet, dass** die kristallisierte Struktur Phasen mit unterschiedlichen Mengen Cr und Mo, eine Phase (Feₐ₁Cr_{b1}Mo_{c1})₂₃(C,B)₆, worin a1 eine Zahl von 27,4 bis 80, b1 eine Zahl ist von 20 bis 60 und c1 eine Zahl ist von 0 bis 12,6 und a1 + b1 + c1 = 100, und eine zweite Phase (Feₐ₁Cr_{b2}Mo_{c2})₆(C,B), worin a2 eine Zahl ist von 25,3 bis 63, B2 eine Zahl ist von 0 bis 8,2 und c2 eine Zahl ist von 37 bis 66,5 und a2 + b2 + c2 = 100.

11. Legierung aus metallischem Glas nach Anspruch 10, **dadurch gekennzeichnet, dass** sie als Hauptphasen (Fe, Cr, Mo)₂₃(C,B)₆ und (Fe,Mo)₆C mit M₇C₃ in Alpha-Fe in geringer Konzentration umfasst.

## Revendications

1. Procédé de production d'un carbure mésoporeux ayant une taille de pore de 10 nm à 70 nm, dans lequel un alliage d'acier amorphe constitué en pourcentage atomique de
FeₐCr_{b}Mo_{c}C_{d}Bₑ
où
a est un nombre de 35 à 65,
b est un nombre de 10 à 20,
c est un nombre de 10 à 20,
d est un nombre de 12 à 20,
e est un nombre de 0 à 10 et
O, Si, Ti et/ou Cu comme impuretés inévitables
est soumis à un traitement thermique à une température de 600 °C à 1 000 °C, résultant en un produit ayant une fraction cristalline supérieure à 50 % de l'alliage et comprenant une première phase de (Feₐ₁Cr_{b1}Mo_{C1})₂₃(C,B)₆, où a1 est un nombre de 27,4 à 80, b1 est un nombre de 20 à 60, et c1 est un nombre de 0 à 12,6, et a1 + b1 + c1 = 100, et une deuxième phase de (Feₐ₂Cr_{b2}Mo_{C2})₆(C,B), où a2 est un nombre de 25, 3 à 63, b2 est un nombre de 0 à 8,2, et c2 est un nombre de 37 à 66,5, et a2 + b2 + c2 = 100, et
le produit du traitement thermique est soumis à un traitement chimique et/ou électrochimique.

2. Procédé selon la revendication 1, dans lequel le rapport de (a + b + c):(d + e) est de 3:1 à 6,5:1, et le rapport de b:c est de 1,2:1 à 1:1,2.

3. Procédé selon l'une quelconque des revendications 1 et 2, **caractérisé en ce que** le traitement thermique est effectué dans une plage de températures supérieure à la deuxième température de cristallisation, si l'alliage amorphe présente plus de deux températures de cristallisation, et à la température de fusion.

4. Procédé selon l'une quelconque des revendications 1 à 3, **caractérisé en ce que** le traitement chimique et/ou électrochimique comprend la mise en contact du produit issu du traitement thermique avec une solution acide ou basique et **en ce que** le traitement électrochimique est réalisé avec une polarisation galvanostatique ou une polarisation potentiostatique.

5. Procédé selon l'une quelconque des revendications 1 à 4, **caractérisé en ce que** le carbure mésoporeux a une taille de pore de 20 nm à 60 nm.

6. Procédé selon l'une quelconque des revendications 1 à 56, **caractérisé en ce que** l'alliage amorphe est obtenu par un procédé de trempe rapide, préférablement à partir d'un procédé de trempe sur roue ou de coulée dans des moules en cuivre, ou en produisant des revêtements par pulvérisation thermique et dépôt physique en phase vapeur.

7. Carbure mésoporeux pouvant être obtenu par le procédé selon l'une quelconque des revendications 1 à 6.

8. Carbure mésoporeux selon la revendication 7, lequel est sous la forme d'un film, d'une feuille, d'une plaque, de barres et de particules, dont la surface présente des mésopores.

9. Utilisation du carbure mésoporeux selon l'une quelconque des revendications 7 ou 8 comme catalyseur ou matériau de support pour un catalyseur.

10. Alliage de verre métallique cristallisé comportant une fraction cristalline supérieure à 50 % ayant la composition constituée en pourcentage atomique de
FeₐCr_{b}Mo_{c}C_{d}Bₑ
où
a est un nombre de 35 à 65,
b est un nombre de 10 à 20,
c est un nombre de 10 à 20,
d est un nombre de 12 à 20,
e est un nombre de 0 à 10,
et O, Si, Ti et/ou Cu comme impuretés inévitables
**caractérisé en ce que** la structure cristallisée comprend des phases comportant différentes quantités de Cr et Mo, une phase de (Feₐ₁Cr_{b1}Mo_{C1})₂₃(C,B)₆, où a1 est un nombre de 27,4 à 80, b1 est un nombre de 20 à 60, et c1 est un nombre de 0 à 12,6, et a1 + b1 + c1 = 100, et une deuxième phase de (Feₐ₂Cr_{b2}Mo_{C2})₆(C,B), où a2 est un nombre de 25,3 à 63, b2 est un nombre de 0 à 8,2, et c2 est un nombre de 37 à 66,5, et a2 + b2 + c2 = 100.

11. Alliage de verre métallique selon la revendication 10, **caractérisé en ce qu'**il comprend comme phases principales (Fe,Cr,Mo)₂₃(C,B)₆ et (Fe,Mo)₆C, avec M₇C₃ et alpha-Fe en concentration mineure.
